# EUROPEAN PATENT SPECIFICATION

(11) **EP 2 825 280 B1**
(45) Date of publication and mention of the grant of the patent: **14.09.2022**
(21) Application number: 13715015.7
(22) Date of filing: 14.03.2013
(51) Int. Cl.: B01D 46/00, B01D 46/54, B01D 46/24, B01D 53/26, B01D 51/10, B01D 53/22, B01D 63/06, C10L 3/10

(54) **MEMBRANE SEPARATING SYSTEM AND MEMBRANE SEPARATING METHOD**
MEMBRANTRENNSYSTEM UND MEMBRANTRENNVERFAHREN
SYSTÈME DE SÉPARATION PAR MEMBRANE ET PROCÉDÉ DE SÉPARATION PAR MEMBRANE

(30) Priority: 14.03.2012 US 201261610513 P
(43) Date of publication of application: 21.01.2015
(73) Proprietor: NGK Insulators, Ltd., Nagoya-shi, Aichi 467-8530 (JP)
(72) Inventor: TAKAGI, Mariko, Nagoya-shi Aichi 467-8530 (JP)
(74) Representative: TBK
(86) International application number: PCT/JP2013/058182
(87) International publication number: WO 2013/137486

(56) References cited:
- EP-A1- 1 958 684
- WO-A1-2012/056666
- WO-A1-2012/157525
- US-A1- 2006 090 651
- US-A1- 2009 000 475
- None

## Description

### Technical Field

The present invention relates to a membrane separating system using a pretreatment device for membrane separation, and a membrane separating method using the membrane separating system.

### Background Art

Heretofore, there has been the problem that when a fluid to be treated is subjected to a separating treatment by use of a membrane separating device including a zeolite membrane, an activated carbon membrane or a silica membrane, the zeolite membrane, the activated carbon membrane or the silica membrane is deteriorated by impurities in the fluid to be treated.

To solve this problem, a method is investigated in which the impurities are prevented from being adsorbed by the above zeolite membrane or the like, thereby suppressing the deterioration of the zeolite membrane or the like to extend the life of the zeolite membrane or the like (e.g., see Patent Document 1).

### Prior Art Document

### Patent Document

Patent Document 1: JP-A-2012-35163

EP 1 958 684 A1 is directed at a filtration comprising two modules, wherein one of these modules comprises an activated carbon cartridge. The activated carbon being comprised in the respective cartridge may have the form of a honeycomb.

US 2006/090651 A1 is directed at a multi-channel cross-flow porous device The device includes a porous body having a plurality of feed-flow pathways disposed in the body for transporting a first stream. The device may comprise a membrane film deposited on the inner surface of each of the pathway walls, which is preferably made of zeolite material.

US 2009/000475 A1 is directed at zeolite membrane structures.

WO 2012/056666 A1 describes an adsorption structure that adsorbs organic matter in treated water, wherein the adsorption structure comprises an outer wall, a plurality of flow paths provided on the inner side of the outer wall, and partition walls for partitioning the plurality of flow paths. The partition walls have an adsorptive material to which the organic matter adsorbs.

WO 2012/157525 A1 describes a carbon dioxide recovery process which uses a membrane separation device that is provided with a zeolite membrane for carbon dioxide separation, said zeolite membrane selectively allowing permeation of carbon dioxide, so that carbon dioxide is separated and removed by pervaporation.

### Summary of the Invention

### Problem to be Solved by the Invention

In a pretreatment device for membrane separation disclosed in the above Patent Document 1, "pretreatment means for adsorbing and removing impurities of a fluid to be treated" is disposed at a preliminary stage of a membrane separating device.

As an adsorbent, zeolite particles are used in the above pretreatment means. When the impurities in the fluid to be treated are to be removed by using the zeolite particles, it is necessary to sufficiently lengthen a time of contact between the fluid to be treated and the zeolite particles (the time when the fluid to be treated stagnates in the pretreatment means). Therefore, the pretreatment means (the pretreatment device) becomes large, or an extra operation such as stirring is required.

The present invention has been developed in view of the above-mentioned problems. That is, an object of the present invention is to **provide a membrane separating system** according to claim 1. A further object is to provide a membrane separating method which uses the above membrane separating system to perform a separating treatment of a fluid to be treated.

### Means for Solving the Problem

[1] A pretreatment device for membrane separation including a honeycomb structure having porous partition walls with which a plurality of cells extending from one end surface to the other end surface are formed to become through channels of a fluid, and a storage container in which the honeycomb structure is stored and which has an inflow port and an outflow port of the fluid, wherein the partition walls include an adsorbent as a main component, a membrane-like adsorbent is disposed on the surfaces of the partition walls, or the partition walls include the adsorbent as the main component and the membrane-like adsorbent is disposed on the surfaces of the partition **walls, is used in a membrane separating system as defined in the claims.**

[6] The membrane separating method is defined in claims 5 to 7.

### Effect of the Invention

In a pretreatment device for membrane separation comprised in the membrane separating system of the present invention, an adsorbent in the pretreatment device for membrane separation is formed into a honeycomb structure. Alternatively, the adsorbent in the pretreatment device for membrane separation is disposed in a membrane-like manner on the surfaces of partition walls of the honeycomb structure. Alternatively, the partition walls include the adsorbent as a main component, and the membrane-like adsorbent is disposed on the surfaces of the partition walls. Therefore, an area of contact between a fluid to be treated and the adsorbent is very large, and a pressure loss at a time when the fluid to be treated passes through the pretreatment device for membrane separation is small. Therefore, it is possible to more efficiently bring the fluid to be -treated into contact with the adsorbent, and the fluid to be treated can efficiently be treated by the pretreatment device for membrane separation.

According to the membrane separating system of the present invention, the pretreatment device for membrane separation wherein the adsorbent of the pretreatment device for membrane separation is the same material as the separation membrane of the membrane separating device is disposed on an upstream side of the membrane separating device. Therefore, it is possible to more efficiently bring the fluid to be treated into contact with the adsorbent, and the fluid to be treated can efficiently be treated by the pretreatment device for membrane separation.

According to a membrane separating method of the present invention, separating treatment of the fluid to be treated is performed in the membrane separating device of the present invention. Therefore, deterioration of a zeolite membrane, an activated carbon membrane or a silica membrane disposed in the membrane separating device can be suppressed, and it is possible to lengthen the life of the zeolite membrane, the activated carbon membrane or the silica membrane.

### Brief Description of the Drawings

Fig. 1 is a schematic view showing a cross section of a pretreatment device for membrane separation of the present invention;
Fig. 2 is a perspective view schematically showing a honeycomb structure constituting the pretreatment device for membrane separation of the present invention;
Fig. 3 is a schematic view showing a cross section of the pretreatment device for membrane separation of the present invention; and
Fig. 4 is a schematic view showing a membrane separating system using the pretreatment device for membrane separation of the present invention.

### Mode for Carrying out the Invention

Hereinafter, embodiments of the present invention will specifically be described with reference to the drawings, but the present invention is not limited to the following embodiments.

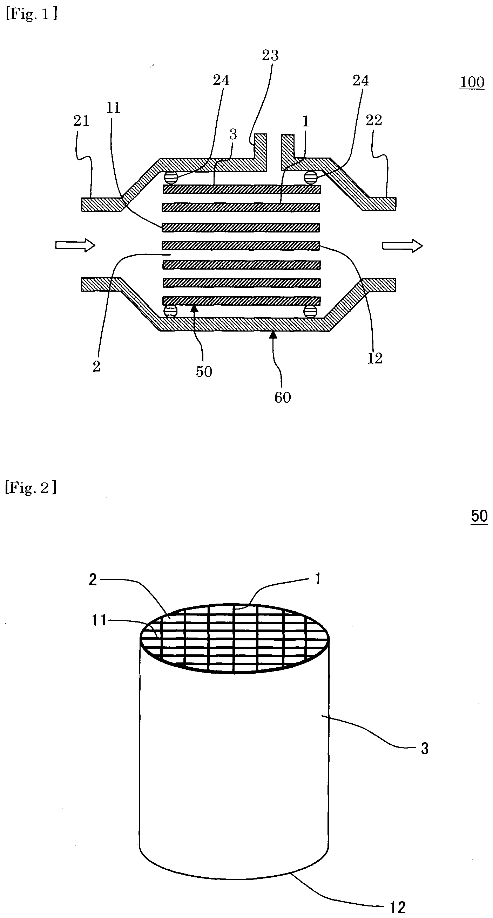

(1) Pretreatment Device for Membrane Separation: As shown in Fig. 1, a pretreatment device for membrane separation for a membrane separating system according to the present invention includes a honeycomb structure 50, and a storage container 60 in which the honeycomb structure 50 is stored and which has an inflow port 21 and an outflow port 22 of a fluid. As shown in Fig. 2, the honeycomb structure 50 has porous partition walls 1 with which a plurality of cells 2 extending from one end surface 11 to the other end surface 12 are formed to become through channels of a fluid. Moreover, the honeycomb structure 50 includes an outer peripheral wall 3, but does not have to include the outer peripheral wall 3. Furthermore, in a pretreatment device 100 for membrane separation,
   the partition walls 1 include an adsorbent as a main component. In the pretreatment device 100 for membrane separation, a suction port 23 is formed in a side surface of the storage container 60, but the suction port 23 does not have to be formed. The suction port 23 is used when pressure reduction is required. The pretreatment device 100 for membrane separation of the present embodiment is fixed in the storage container 60 by O-rings 24. Fig. 1 is a schematic view showing a cross section of the pretreatment device for membrane separation of the present invention. Fig. 2 is a perspective view schematically showing the honeycomb structure constituting the pretreatment device for membrane separation of the present invention.

In this way, since the pretreatment device 100 for membrane separation includes the honeycomb structure having the partition walls 1 including the adsorbent as the main component, an area of contact between the fluid to be treated and the adsorbent is very large, and a pressure loss at a time when the fluid to be treated passes through the pretreatment device for membrane separation is small. Therefore, it is possible to more efficiently bring the fluid to be treated into contact with the adsorbent, and the fluid to be treated can efficiently be treated by the pretreatment device for membrane separation. Here, the main component is a component contained as much as 90 mass% or more in the whole material.

In the pretreatment device 100 for membrane separation, a total of surface area in the cells 2 of the honeycomb structure 50 is preferably from 5 to 1000 cm²/cm³. In consequence, a stagnation time of the fluid to be treated can be shortened. When the total surface area is smaller than 5 cm²/cm³, an effect of shortening the stagnation time of the fluid to be treated deteriorates sometimes. When the total surface area is larger than 1000 cm²/cm³, the pressure loss increases sometimes. Here, "the total (cm²/cm³) of the surface area in the cells 2 of the honeycomb structure 50" is a total (cm²) of the surface area in the cells 2 per unit volume (1 cm³) of the honeycomb structure 50.

In the pretreatment device 100 for membrane separation, the adsorbent is preferably at least one selected from the group consisting of zeolite, activated carbon and silica. When a separation membrane of a separating device is a zeolite membrane, the adsorbent is zeolite. When the separation membrane of the separating device is an activated carbon membrane, the adsorbent is activated carbon. When the separation membrane of the separating device is a silica membrane, the adsorbent is silica.

In the pretreatment device 100 for membrane separation, a porosity of the partition walls is preferably from 30 to 70%. When the porosity is smaller than 30%, the pressure loss increases sometimes. Moreover, when the porosity is in excess of 70%, a strength deteriorates sometimes. The porosity is a value measured by mercury porosimetry. Moreover, an average pore diameter of the partition walls is preferably from 0.1 to 10 µm. The average pore diameter is a value measured by the mercury porosimetry. Furthermore, a thickness of each of the partition walls is preferably from 10 to 1000 µm. According to such a constitution, the honeycomb structure having a high strength and a decreased pressure loss can be obtained.

There is not any special restriction on a shape of the honeycomb structure, but the shape is preferably a cylindrical shape, a tubular shape in which end surfaces are elliptic, a pillar shape in which end surfaces have a polygonal shape such as "a square shape, a rectangular shape, a triangular shape, a pentangular shape, a hexagonal shape or an octagonal shape" or the like. Moreover, there is not any special restriction on a cell shape of the honeycomb structure (the cell shape in a cross section of the honeycomb structure which is perpendicular to a central axis direction (the cell extending direction)). Examples of the cell shape include a triangular shape, a quadrangular shape, a hexagonal shape, an octagonal shape, a circular shape, and "combinations of these shapes". The quadrangular shape is preferably a square shape or a rectangular shape. A cell density of the honeycomb structure is preferably from 4 to 10000 cells/cm². According to such a constitution, the increase of the pressure loss can be suppressed, while maintaining the strength of the honeycomb structure.

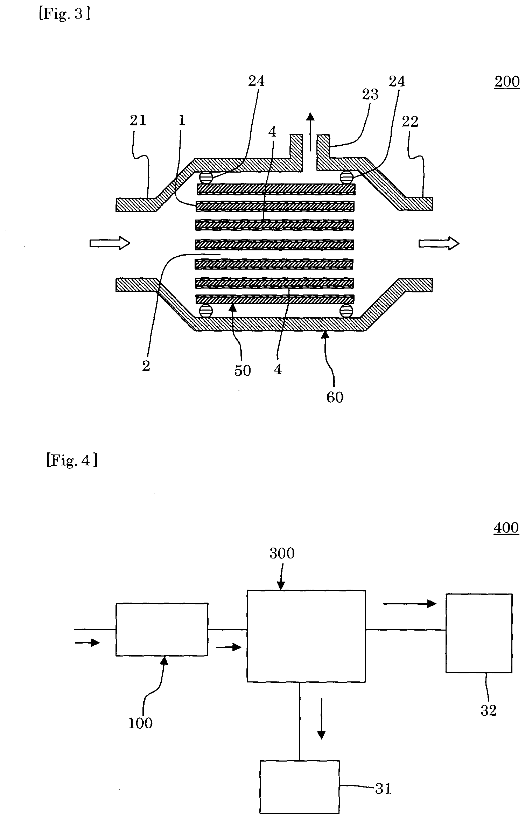

In another pretreatment device for membrane separation of the present invention, as shown in Fig. 3, "a membrane-like adsorbent 4" (e.g., a zeolite membrane, a activated carbon membrane or a silica membrane) is disposed on the surfaces of partition walls 1 in the above one embodiment of the pretreatment device for membrane separation of the present invention. Moreover, examples of a material of the partition walls 1 include a porous ceramic material, and a metal. Furthermore, the material of the partition walls 1 may be zeolite, activated carbon or silica. Fig. 3 is a schematic view showing a cross section of the other pretreatment device for membrane separation of the present invention.

**In the present pretreatment device 200 for membrane separation a suction port 23** is formed in a side surface of a storage container 60. When a fluid to be treated is allowed to flow **through the present pretreatment device 200 for membrane separation, a pressure of a** space on the side of a surface of "the membrane-like adsorbent 4" of the pretreatment device for membrane separation which is opposite to a surface of the adsorbent to which the fluid to be treated is supplied is preferably reduced through the suction port 23. In consequence, it is possible to more efficiently remove impurities in the fluid to be treated. In **the present pretreatment device 200 for membrane separation,**
"a space on the side of "the surface" of the membrane-like adsorbent 4 "to which the fluid to be treated is supplied"" and "the space on the side of "the surface" of the membrane-like adsorbent 4 "which is opposite to the surface to which the fluid to be treated is supplied"" are divided via O-rings 24.

(2) Manufacturing Method of Pretreatment Device for Membrane Separation:
There is not any special restriction on a method of manufacturing the pretreatment device for membrane separation of the present invention, but the method is preferably a method of preparing the honeycomb structure, preparing the storage container, and inserting the honeycomb structure into the storage container to obtain the pretreatment device for membrane separation. Hereinafter, the manufacturing method of the pretreatment device for membrane separation of the present invention will further specifically be described.

(2-1) Case where the partition walls of the honeycomb structure include the adsorbent as the main component:
(2-1-1) Case where the adsorbent is zeolite:
In the case where the partition walls of the honeycomb structure include the adsorbent as the main component and the adsorbent is zeolite, the honeycomb structure is preferably prepared by the following method.

First, a tetra propyl ammonium hydroxide (TPAOH) solution and tetra propyl ammonium bromide (TPABr) are preferably added to silica sol, to obtain the prepared solution. The obtained prepared solution is preferably subjected to a heating treatment in an airtight container on conditions that precipitation does not take place in the prepared solution. Then, the prepared solution subjected to the heating treatment is preferably dried to prepare a dry gel. Then, the obtained dry gel is preferably formed into a honeycomb shape to prepare a formed honeycomb body. Then, the formed honeycomb body formed by the dry gel is preferably subjected to a crystallizing treatment in a steam, to obtain the honeycomb structure in which the main component of the partition walls is zeolite.

A blend ratio (the TPA/SiO₂ molar ratio) between tetra propyl ammonium ions (TPA) and silica sol described above is preferably from 0.015 to 0.08. In consequence, the honeycomb structure having a sufficiently high bending strength can be obtained.

Moreover, a tetra propyl ammonium ion (TPA) source may be made only of TPABr.

Furthermore, when the TPA/SiO₂ molar ratio of the prepared solution and blend ratios of TPAOH and TPABr to a total amount of TPA are kept in the above predetermined amounts, the prepared solution may include sodium hydroxide. According to such a constitution, a pH of the prepared solution can be regulated. Moreover, an alkali source other than sodium hydroxide, for example, potassium hydroxide or the like may be added.

When the prepared solution is placed into the airtight container, the prepared solution is preferably placed into a container of a material which does not cause a reaction with the prepared solution, and then placed into the airtight container. An example of "the container of the material which does not cause the reaction with the prepared solution" is a fluororesin container. Then, the fluororesin container in which the prepared solution is contained is disposed in the airtight container, and airtightly closed. As the airtight container, a pressure-resistant container can suitably be used, because an inner pressure of the container rises sometimes in the heating treatment. Moreover,
for example, the prepared solution may directly be placed into the airtight container, and airtightly closed, as long as the prepared solution is held in an airtight manner.

When the prepared solution in the airtight container is subjected to the heating treatment on the conditions that the precipitation does not take place in the prepared solution, the heating treatment is preferably performed by using a drier, a constant-temperature tank or the like. In the drier or the constant-temperature tank, it is easy to control the prepared solution to a predetermined temperature. Moreover, the heating treatment may be performed by using heating means for warming in hot water, or the like.

After end of the heating treatment, the prepared solution in the airtight container is preferably removed from the drier as it is, to cool the prepared solution down to room temperature. During the cooling, the prepared solution may be airtight in the airtight container, or may be removed from the airtight container.

There is not any special restriction on a method of drying the prepared solution subjected to the heating treatment to obtain the dry gel, but the method is preferably a method in which a water content of the prepared solution can suitably be removed. An example of the specific drying method is stationary drying, direct spray drying of the sol by a spray drier or the like, or drying while performing stir kneading. A suitable example of the drying while performing the stir kneading is the following method. That is, first, the prepared solution is placed into a fluororesin beaker, and stirred with a magnetic stirrer. Afterward, the prepared solution is manually stirred and kneaded by using a fluororesin rod while heating the prepared solution in the constant-temperature tank set to a predetermined temperature, to evaporate the water content in this suitable example of the method. The stir kneading at this time may be performed by a heating kneader or the like. Moreover, when the prepared solution is gelled, the prepared solution may manually be stirred and kneaded from the start.

When the obtained dry gel is formed into the honeycomb shape to prepare the formed honeycomb body, the obtained dry gel is preferably adjusted to a predetermined shape by extrusion.

An example of a method of subjecting the formed honeycomb body formed by the dry gel to the crystallizing treatment in the steam is the following method. That is, the formed honeycomb body is disposed on a fluororesin plate so that the body does not come in contact with water in a stainless steel pressure-resistant container with a fluororesin inner cylinder in which distilled water of the same mass as a mass of the formed body is contained. Then, a reaction is carried out under a saturated steam pressure at 130 to 200°C in an oven for two to ten hours, to perform the crystallizing treatment. Then, after sufficient washing at 50 to 100°C in hot water, the drying is performed at 50 to 100°C in the drier, to obtain the formed honeycomb body in which "the partition walls include zeolite as the main component". An amount of the distilled water at this time may be not less than an amount at which the saturated steam pressure is reached in a volume of the pressure-resistant container for use, and there is not any other special restriction on the amount of the distilled water. Moreover, the washing and drying step performed after the crystallizing treatment may be omitted.

(2-1-2) Case where the adsorbent is activated carbon:
In a case where the partition walls of the honeycomb structure include the adsorbent as the main component and the adsorbent is activated carbon, the honeycomb structure is preferably prepared by the following method.

First, methylcellulose, natural pitch and water are preferably added to brown coal powder to prepare a forming raw material. An amount of methylcellulose to be added is preferably from 5 to 20 parts by mass to 100 parts by mass of the brown coal powder. An amount of natural pitch to be added is preferably from 30 to 80 parts by mass to 100 parts by mass of the brown coal powder. An amount of water to be added is preferably from 30 to 100 parts by mass to 100 parts by mass of the brown coal powder. Particle diameters of the brown coal powder are preferably diameters of particles which pass through 200 mesh and which do not pass through 325 mesh. Moreover, after sufficiently kneading and plasticizing the obtained forming raw material by the kneader, the forming raw material is preferably formed into the honeycomb shape by use of a die, to obtain the formed honeycomb body. The obtained formed honeycomb body is preferably dried at 60 to 120°C in the atmosphere of a humidity of 50 to 95% for 10 to 100 hours. Afterward, the formed honeycomb body is preferably fired at 500 to 1000°C in the atmosphere of a nitrogen gas for one to 20 hours, and carbonized.

Then, the carbonized formed honeycomb body is preferably held at 150 to 1000°C for one to 30 hours while allowing the steam generated from the nitrogen gas and the water at 50 to 100°C to pass through the formed honeycomb body, to activate the honeycomb body. In consequence, the honeycomb structure in which the main component of the partition walls is activated carbon is preferably obtained. A flow rate of the steam is preferably from 0.1 to 10 ml/minute.

(2-1-3) Case where the adsorbent is silica:
In a case where the partition walls of the honeycomb structure include the adsorbent as the main component and the adsorbent is silica, the honeycomb structure is preferably prepared by the following method.

Water and an organic binding agent are preferably added to silica powder to prepare the forming raw material. A content of the silica powder in the forming raw material is preferably from 40 to 60 parts by mass in 100 parts by mass of the forming raw material. A content of the water in the forming raw material is preferably from 35 to 55 parts by mass in 100 parts by mass of the forming raw material. A content of the organic binding agent in the forming raw material is preferably from 5 to 10 parts in 100 parts by mass of the forming raw material. An example of the organic binding agent is a water-soluble cellulose derivative. After kneading and plasticizing the obtained forming raw material, the forming raw material is preferably formed into the honeycomb shape by use of a vacuum extruder, to obtain the formed honeycomb body. When the formed honeycomb body is formed by the vacuum extruder, such a die as to obtain a desirable cell structure is preferably used. The obtained formed honeycomb body is preferably dried at 70 to 90°C in the atmosphere of a humidity of 70 to 90% for 10 to 100 hours. Afterward, the formed honeycomb body is preferably fired at 1250 to 1350°C for one to 10 hours to obtain "the honeycomb structure in which the main component of the partition walls is silica".

(2-2) Case where the membrane-like adsorbent is disposed on the surfaces of the partition walls of the honeycomb structure:
In a case where the membrane-like adsorbent is disposed on the surfaces of the partition walls of the honeycomb structure, the honeycomb structure is prepared, and the membrane-like adsorbent is disposed on the surfaces of the partition walls of the obtained honeycomb structure.

(2-2-1) Manufacturing Method of Honeycomb Structure
A manufacturing method of the honeycomb structure preferably includes a kneaded material preparing step, a forming step and a firing step. The kneaded material preparing step is preferably a step of mixing and kneading the forming raw material containing a ceramic raw material to obtain a kneaded material. The forming step is preferably a step of forming the obtained kneaded material into a honeycomb shape to obtain the formed honeycomb body. The firing step is preferably a step of drying and firing the obtained formed honeycomb body, to obtain the honeycomb structure including porous partition walls with which a plurality of cells are formed to become through channels of a fluid.

(2-2-1-1) Kneaded Material Preparing Step

First, the forming raw material containing the ceramic raw material is preferably mixed and kneaded to obtain the kneaded material (the kneaded material preparing step).

The ceramic raw material contained in the forming raw material is preferably at least one selected from the group consisting of a cordierite forming raw material, cordierite, silicon carbide, a silicon-silicon carbide composite material, mullite, alumina, aluminum titanate, silicon nitride, a silicon carbide-cordierite composite material, lithium aluminum silicate, and aluminum titanate. The cordierite forming raw material is the ceramic raw material blended so as to obtain a chemical composition which falls in a range of 42 to 56 mass% of silica, 30 to 45 mass% of alumina, and 12 to 16 mass% of magnesia, and is fired to become cordierite.

As a pore former, a water-absorbing resin or the like can suitably be used.

There is not any special restriction on an amount of the pore former to be added, and the amount is preferably such an amount as to obtain a desirable porosity, strength and the like. The amount of the pore former to be added is, for example, preferably from 1 to 10 parts by mass, further preferably from 1 to 8 parts by mass, and especially preferably from 1 to 6 parts by mass to 100 parts by mass of the ceramic raw material.

There is not any special restriction on an average particle diameter of the pore former, and the diameter is preferably such a value as to obtain a desirable porosity, strength and the like. The average particle diameter is, for example, preferably from 50 to 200 µm, further preferably from 80 to 170 µm, and especially preferably from 100 to 150 µm.

Moreover, the forming raw material is preferably prepared by further mixing the above ceramic raw material and pore former with a dispersion medium, an organic binder, an inorganic binder, a surfactant and the like. There is not any special restriction on a composition ratio of each raw material, and the composition ratio is preferably determined in accordance with a structure, material and the like of the honeycomb structure to be prepared.

The dispersion medium is preferably water and the like. An amount of the dispersion medium to be added is preferably from 30 to 150 parts by mass to 100 parts by mass of the ceramic raw material.

The organic binder is preferably methylcellulose, hydroxypropyl methylcellulose, hydroxypropyl ethyl cellulose, hydroxyethyl cellulose, carboxymethylcellulose, polyvinyl alcohol or a combination of these binders. Moreover, an amount of the organic binder to be added is preferably from 1 to 10 parts by mass to 100 parts by mass of the ceramic raw material.

As the surfactant, ethylene glycol, dextrin, fatty acid soap (e.g., lauric potash soap), polyalcohol or the like can be used. One of these surfactants may be used alone, or a combination of two or more of the surfactants may be used. An amount of the surfactant to be added is preferably from 0.1 to 5 parts by mass to 100 parts by mass of the ceramic raw material.

There is not any special restriction on a method of kneading the forming raw material to form the kneaded material, and an example of the method is a method using a kneader, a vacuum clay kneader or the like.

(2-2-1-2) Forming Step

Next, the obtained kneaded material is preferably formed into the honeycomb shape to obtain the formed honeycomb body (the forming step). There is not any special restriction on a method of forming the kneaded material to obtain the formed honeycomb body, and a known forming method such as extrusion or injection can be used. A suitable example of the method is a method of extruding the material by use of a die having a desirable cell shape, partition wall thickness and cell density to obtain the formed honeycomb body.

There is not any special restriction on a shape of the formed honeycomb body, and the shape is preferably a cylindrical shape, a tubular shape in which end surfaces are elliptic, a pillar shape in which end surfaces have a polygonal shape such as "a square shape, a rectangular shape, a triangular shape, a pentangular shape, a hexagonal shape or an octagonal shape" or the like.

(2-2-1-3) Firing Step:

Next, the obtained formed honeycomb body is preferably dried and fired to obtain "the honeycomb structure including the porous partition walls with which the plurality of cells extending from one end surface to the other end surface to become the through channels of the fluid are formed" (the firing step).

There is not any special restriction on a drying method, but examples of the method include hot air drying, microwave drying, dielectric drying, reduced pressure drying, vacuum drying, and freeze drying. Among these methods, the dielectric drying, the microwave drying or the hot air drying is preferably performed alone, or a combination of the methods is preferably performed.

Prior to firing the formed honeycomb body (the main firing), this formed honeycomb body is preferably calcinated. The calcinating is performed for degreasing. There is not any special restriction on a calcinating method, as long as at least a part of an organic substance (the organic binder, the surfactant, the pore former or the like) in the formed honeycomb body can be removed. In general, a burning temperature of the organic binder is from about 100 to 300°C, a burning temperature of the pore former is from about 200 to 800°C, and hence calcinating conditions are preferably the conditions that heating is performed at about 200 to 1000°C in an oxidizing atmosphere for 10 to 100 hours.

The firing of the formed honeycomb body (the main firing) is performed to sinter and density the forming raw material constituting the calcinated formed body, thereby acquiring a predetermined strength. Firing conditions (temperature, time, and atmosphere) vary in accordance with a type of the forming raw material, and hence suitable conditions may be selected in accordance with the type of the forming raw material. For example, when the cordierite forming raw material is used, the firing temperature is preferably from 1350 to 1440°C. Moreover, the firing time as a time to keep the highest temperature is preferably from three to ten hours. There is not any special restriction on a device to perform the calcinating and main firing, but an electric furnace, a gas furnace or the like can be used.

(2-2-2) Method of disposing the membrane-like adsorbent on the surfaces of the partition walls of the honeycomb structure:
The method of disposing the membrane-like adsorbent on the surfaces of the partition walls of the honeycomb structure varies in accordance with a type of the adsorbent, and hence the method for each type of adsorbent will hereinafter be described.

(2-2-2-1) Case where the adsorbent is zeolite:
There is not any special restriction on a method of disposing the membrane-like zeolite on the surfaces of the partition walls of the honeycomb structure, but an example of the method is preferably a method having a particle attaching step, a membrane forming step, and a structure directing agent removing step. The particle attaching step is a step of attaching zeolite particles as seeds to the honeycomb structure. The membrane forming step is a step of immersing the honeycomb structure to which the zeolite particles have been attached, into a sol including a structure regulating agent to carry out hydrothermal synthesis, thereby forming a zeolite membrane on a porous base material. The structure regulating agent removing step is a step of removing the structure regulating agent in an O₂ atmosphere. As the particle attaching step and the membrane forming step, a known method can be used.

A structure regulating agent removing temperature in the structure regulating agent removing step is preferably not lower than 300°C, is further preferably from 400 to 700°C, and especially preferably from 400 to 600°C.

(2-2-2-2) Case where the adsorbent is activated carbon:
There is not any special restriction on a method of disposing membrane-like activated carbon on the surfaces of the partition walls of the honeycomb structure, but an example of the method is preferably a method having a precursor membrane forming step and a precursor membrane carbonizing step. In the precursor membrane forming step, the honeycomb structure is preferably immersed into an organic polymer solution which is a precursor of an activated carbon membrane to attach the organic polymer solution, and then a heat treatment is performed to form a polyimide membrane which is the precursor. Afterward, in the carbonizing step, the polyimide membrane is preferably carbonized at 500 to 1200°C in a reducing atmosphere to obtain the activated carbon membrane. A type of the precursor can be a suitable known precursor in accordance with a use application or the like. In the membrane formation, a known method such as a CVD (chemical vapor deposition) method can be used.

(2-2-2-3) Case where the adsorbent is silica:
There is not any special restriction on a method of disposing membrane-like silica on the surfaces of the partition walls of the honeycomb structure, but an example of the method is preferably a method having a precursor membrane forming step and a silica membrane forming step. In the precursor membrane forming step, the honeycomb structure is preferably immersed into a silica sol solution which is a precursor to attach the silica sol solution, thereby forming a silica sol membrane on the surface of the honeycomb structure. Afterward, in the silica membrane forming step, a heat treatment is preferably performed at 400 to 1000°C to obtain a silica membrane. A type of the precursor can be a suitable known precursor in accordance with a use application or the like. In the membrane formation, a known method such as the CVD (chemical vapor deposition) method can be used.

(2-3) Case where the partition walls include the adsorbent as the main component and the membrane-like adsorbent is disposed on the surfaces of the partition walls:
In "the case where the partition walls include the adsorbent as the main component and the membrane-like adsorbent is disposed on the surfaces of the partition walls", the following method is preferably used. That is, the honeycomb structure is preferably prepared by the method of the above-mentioned "case where the partition walls of the honeycomb structure include the adsorbent as the main component", and the membrane-like adsorbent is preferably disposed by the method of the above-mentioned "case where the membrane-like adsorbent is disposed on the surfaces of the partition walls of the honeycomb structure". Moreover, the adsorbent which is the main component of the partition walls is the same material as the membrane-like adsorbent disposed on the surfaces of the partition walls.

(3) Membrane Separating System:
As shown in Fig. 4, one embodiment of a membrane separating system of the present invention includes the one embodiment (the pretreatment device 100 for membrane separation) of the above pretreatment device for membrane separation of the present invention, and "a membrane separating device 300 including a separation membrane" which is disposed on a downstream side of the pretreatment device 100 for membrane separation. A membrane separating system 400 of the present embodiment includes a container 32 for a penetrating substance to retain the penetrating substance which has penetrated the membrane, and a container 31 for a non-penetrating substance to retain the non-penetrating substance which has not penetrated the membrane. Moreover, the membrane separating system of the present invention may include the other embodiment (the pretreatment device 200 for membrane separation, see Fig. 3) of the above pretreatment device for membrane separation of the present invention, in place of the pretreatment device 100 for membrane separation. Since the one embodiment of the membrane separating system of the present invention includes the one embodiment (the pretreatment device 100 for membrane separation) of the pretreatment device for membrane separation of the present invention, impurities which adversely affect the separation membrane of the membrane separating device 300 can efficiently be removed by the pretreatment device 100 for membrane separation. In consequence, the life of the separation membrane of the membrane separating device 300 can be lengthened. Fig. 4 is a schematic view showing the membrane separating system using the one embodiment of the pretreatment device for membrane separation of the present invention.

In the membrane separating system 400 of the present embodiment, the separation membrane disposed in the membrane separating device 300 is preferably a zeolite membrane, an activated carbon membrane or a silica membrane. Moreover, the adsorbent of the pretreatment device 100 for membrane separation is
the same material as the separation membrane of the membrane separating device 300. When the adsorbent of the pretreatment device 100 for membrane separation is the same material as the separation membrane of the membrane separating device 300, the impurities which adversely affect the separation membrane of the membrane separating device 300 can more efficiently be removed by the pretreatment device 100 for membrane separation.

(4) Membrane Separating Method:
One embodiment of a membrane separating method of the present invention first allows a fluid to be treated (the fluid separated by the separation membrane of the separating device) to flow into "the pretreatment device 100 for membrane separation of the membrane separating system 400 through the inflow port of the device", flow through the honeycomb structure, and flow out of the device through the outflow port of the device. Afterward, the fluid to be treated is supplied to the membrane separating device 300, to separate the fluid to be treated by the membrane separating device 300. The fluid to be treated is separated into the penetrating substance (the substance in the fluid to be treated which has penetrated the separation membrane) and the non-penetrating substance (the substance in the fluid to be treated which has not penetrated the separation membrane) by the membrane separating device 300. The penetrating substance is fed into the container 32 for the penetrating substance, and the non-penetrating substance is fed into the container 31 for the non-penetrating substance. According to the membrane separating method of the present embodiment, the one embodiment of the pretreatment device for membrane separation of the present invention is disposed on the upstream side of the membrane separating device, to perform a separating treatment of the fluid to be treated. Therefore, deterioration of the zeolite membrane, the activated carbon membrane or the silica membrane disposed in the membrane separating device can be suppressed, and it is possible to lengthen the life of the zeolite membrane, the activated carbon membrane or the silica membrane.

In the membrane separating method of the present invention, when the other embodiment (the pretreatment device 200 for membrane separation, see Fig. 3) of the above pretreatment device for membrane separation of the present invention is used as the pretreatment device for membrane separation, the following operation is preferably performed. That is, a pressure of a space on the side of "a surface" of "the membrane-like adsorbent" of the pretreatment device for membrane separation "which is opposite to "a surface side to which the fluid to be treated is supplied"" is preferably reduced, to separate the fluid to be treated. In consequence, it is possible to more efficiently remove the impurities in the fluid to be treated. In the pretreatment device 200 for membrane separation (see Fig. 3), the membrane-like adsorbent is disposed on the surfaces of the partition walls of the honeycomb structure.

In the membrane separating method of the present embodiment, a speed of the fluid to be treated which flows "through the cells of the honeycomb structure" when allowing the fluid to be treated to pass through the pretreatment device for membrane separation is preferably from 0.1 to 5 m/second. In consequence, it is possible to more efficiently remove the impurities in the fluid to be treated. When the speed is lower than 0.1 m/second, a treatment time of the fluid to be treated by the pretreatment device for membrane separation lengthens sometimes, and a separating time of the whole membrane separating method lengthens sometimes. When the speed is higher than 5 m/second, an effect of removing the impurities in the fluid to be treated deteriorates sometimes.

Moreover, the membrane separating system of the present invention can suitably be used in the separating treatment of the fluid to be treated. Furthermore, the membrane separating method of the present invention can suitably be used in the separating treatment of the fluid to be treated.

In the present description, examples of the fluid to be treated include a mixed gas such as "a natural gas or a synthesis gas refined in a chemical plant", an organic solvent including "an impurity such as water used in a factory", and a liquid mixture constituted of a plurality of compounds generated in a reaction.

### Examples

Hereinafter, the membrane separating system and the membrane separating method of the present invention will further specifically be described with respect to examples, but the present invention is not limited to these examples.

### (Example 1)

First, a honeycomb structure in which a main component of partition walls was zeolite was prepared. Specifically, the honeycomb structure was prepared as follows. First, silica sol was placed into a fluororesin container, and further a tetra propyl ammonium hydroxide (TPAOH) solution and tetra propyl ammonium bromide (TPABr) were added, to obtain a prepared solution. The fluororesin container in which the prepared solution was contained was disposed in a pressure-resistant airtight container, and airtightly closed. Afterward, the prepared solution was subjected to a heating treatment in the airtight container on conditions that precipitation did not take place in the prepared solution. After end of the heating treatment, the airtight container was removed from a drier, and the prepared solution was cooled to room temperature. Then, the prepared solution subjected to the heating treatment was dried to prepare a dry gel. A drying method was stationary drying. Then, the obtained dry gel was formed into a honeycomb shape to prepare a formed honeycomb body. When the dry gel was formed into the honeycomb shape to prepare the formed honeycomb body, the obtained dry gel was adjusted to a predetermined shape by extrusion, to obtain a formed dry gel body (the formed honeycomb body). The formed honeycomb body formed by the dry gel was subjected to a crystallizing treatment in a steam, to obtain the honeycomb structure in which the main component of the partition walls was zeolite. When the formed honeycomb body formed by the dry gel was subjected to the crystallizing treatment in the steam, the following method was used. That is, the formed honeycomb body was disposed in a stainless steel pressure-resistant container with a fluororesin inner cylinder in which distilled water of the same mass as a mass of the formed body was contained. When the formed honeycomb body was disposed in the stainless steel pressure-resistant container with the fluororesin inner cylinder, the formed honeycomb body was disposed on a fluororesin plate so that the formed honeycomb body did not come in contact with water. Then, a reaction was carried out at 130 to 200°C in an oven for two to ten hours, to perform the crystallizing treatment. Then, after sufficient washing at 50 to 100°C in hot water, the drying was performed at 100°C in the drier, to obtain the honeycomb structure in which the main component of the partition walls was zeolite. An amount of the distilled water at this time was not less than an amount at which a saturated steam pressure was reached in a volume of the pressure-resistant container for use.

A surface area in cells of the obtained honeycomb structure was 500 cm²/cm³. Moreover, the honeycomb structure was cylindrical, a diameter of a bottom surface was 30 mm, and a length in a central axis direction was 160 mm. Moreover, a cell density of the honeycomb structure was 100 cells/cm², and a partition wall thickness was 100 µm.

Next, a cylindrical storage container made of stainless steel (a storage container 60) as shown in Fig. 1 was prepared. The storage container had an inflow port and an outflow port, and the honeycomb structure was fixed in the storage container by O-rings.

Next, the honeycomb structure was inserted into the storage container, and the honeycomb structure was fixed in the storage container by the O-rings, to obtain a pretreatment device for membrane separation.

Next, the pretreatment device for membrane separation was attached to a piping line, and a membrane separating device was disposed on a downstream side, to prepare a membrane separating system. As the membrane separating device, there was used a device in which a zeolite membrane was disposed on partition walls of a honeycomb-like structure. A material of the honeycomb-like structure was cordierite, a shape was cylindrical, a diameter of a bottom surface was 30 mm, and a length in a central axis direction was 160 mm. Moreover, a cell density of the honeycomb-like structure was 100 cells/cm², and a partition wall thickness was 100 µm. A thickness of the zeolite membrane was 1 µm.

In the membrane separating system, a gas to be treated was allowed to flow into the pretreatment device for membrane separation through the inflow port, the gas to be treated was allowed to pass through the honeycomb structure, and discharged through the outflow port, and the discharged gas to be treated was transferred to the membrane separating device through the piping line, and subjected to a separating treatment in the membrane separating device.

The obtained membrane separating system was subjected to "a deteriorated state confirming test of a separation membrane" by the following method. The result is shown in Table 1.

### (Deteriorated State Confirming Test of Separation Membrane)

While allowing 97 mass% of an aqueous solution of IPA (isopropyl alcohol) as a fluid to be treated to flow through the membrane separating system at a speed of 3 m/second, permeation vaporizing separation was carried out on conditions of 70°C and 100 Torr for 1000 hours. A penetrating flux of water which penetrated the membrane at an initial stage of the test was compared with the flux after 1000 hours, to confirm the deteriorated state of the separation membrane of the membrane separating device. The deteriorated state of the separation membrane was evaluated by a "drop" ratio of a value after 1000 hours to an initial value of the flux. In Table 1, the evaluation result is shown in a column of "the deterioration ratio of the separation membrane". The smaller "the deterioration ratio of the separation membrane" is, the more suitable the evaluation result becomes.

**[Table 1]**

| | Configuration of adsorbent | Type of adsorbent | Surface area in cell (cm²/cm³) | Type of separation membrane | Flow speed of fluid to be treated | Deterioration ratio of separation membrane |
|---|---|---|---|---|---|---|
| Example 1 | Partition wall | Zeolite | 500 | Zeolite | 3 | 5% |
| Example 2 | Partition wall | Zeolite | 3 | Zeolite | 3 | 10% |
| Example 3 | Partition wall | Zeolite | 5 | Zeolite | 3 | 9% |
| Example 4 | Partition wall | Zeolite | 1000 | Zeolite | 3 | 3% |
| Example 5 | Partition wall | Zeolite | 1100 | Zeolite | 3 | 4% |
| Example 6 | Partition wall | Zeolite | 500 | Zeolite | 0.05 | 4% |
| Example 7 | Partition wall | Zeolite | 500 | Zeolite | 0.1 | 3% |
| Example 8 | Partition wall | Zeolite | 500 | Zeolite | 5 | 6% |
| Example 9 | Partition wall | Zeolite | 500 | Zeolite | 6 | 10% |
| Example 10 | Partition wall | Activated carbon | 500 | Activated carbon | 3 | 5% |
| Example 11 | Partition wall | Silica | 500 | Silica | 3 | 5% |
| Example 12 | membrane | Zeolite | 500 | Zeolite | 3 | 3% |
| Example 13 | membrane | Zeolite | 3 | Zeolite | 3 | 10% |
| Example 14 | membrane | Zeolite | 5 | Zeolite | 3 | 7% |
| Example 15 | membrane | Zeolite | 1000 | Zeolite | 3 | 2% |
| Example 16 | membrane | Zeolite | 1100 | Zeolite | 3 | 3% |
| Example 17 | membrane | Activated carbon | 500 | Activated carbon | 3 | 3% |
| Example 18 | membrane | Silica | 500 | Silica | 3 | 3% |
| Example 19 | Partition wall & membrane | Zeolite | 500 | Zeolite | 3 | 2% |
| Example 20 | Partition wall & membrane | Zeolite | 3 | Zeolite | 3 | 8% |
| Example 21 | Partition wall & membrane | Zeolite | 5 | Zeolite | 3 | 6% |
| Example 22 | Partition wall & membrane | Zeolite | 1000 | Zeolite | 3 | 1% |
| Example 23 | Partition wall & membrane | Zeolite | 1100 | Zeolite | 3 | 2% |
| Example 24 | Partition wall & membrane | Activated carbon | 500 | Activated carbon | 3 | 2% |
| Example 25 | Partition wall & membrane | Silica | 500 | Silica | 3 | 2% |
| Comparative Ex. 1 | Membrane separating system not using pretreatment device for membrane separation | | | Zeolite | 3 | 15% |
| Comparative Ex. 2 | Membrane separating system not using pretreatment device for membrane separation | | | Activated carbon | 3 | 15% |
| Comparative Ex. 3 | Membrane separating system not using pretreatment device for membrane separation | | | Silica | 3 | 15% |

### (Examples 2 to 9)

Membrane separating systems were prepared similarly to Example 1, except that respective conditions were changed as shown in Table 1. The obtained membrane separating systems were subjected to "a deteriorated state confirming test of a separation membrane" by the above method. The results are shown in Table 1.

### (Example 10)

A honeycomb structure in which a main component of partition walls was activated carbon was prepared. Specifically, the honeycomb structure was prepared as follows. First, methylcellulose, natural pitch and water were added to brown coal powder to prepare a forming raw material. An amount of methylcellulose to be added was 10 parts by mass to 100 parts by mass of the brown coal powder. An amount of the natural pitch to be added was 50 parts by mass to 100 parts by mass of the brown coal powder. An amount of the water to be added was 70 parts by mass to 100 parts by mass of the brown coal powder. Particle diameters of the brown coal powder were diameters of particles which passed through 200 mesh and which did not pass through 325 mesh. Then, after sufficiently kneading and plasticizing the obtained forming raw material by a kneader, the forming raw material was formed into a honeycomb shape by use of a die, to obtain a formed honeycomb body. The obtained formed honeycomb body was dried at 80°C in an atmosphere of a humidity of 90% for 24 hours. Afterward, the formed honeycomb body was fired at 700°C in the atmosphere of a nitrogen gas for six hours, and carbonized.

Then, the carbonized formed honeycomb body was held at 800°C for five hours, and activated while steam generated from a nitrogen gas and water at 90°C was allowed to pass through the formed honeycomb body. In consequence, the honeycomb structure in which the main component of the partition walls was activated carbon was obtained. A flow rate of the steam was 0.5 ml/minute.

By use of the obtained honeycomb structure, a membrane separating system was prepared by the method described in Example 1. Additionally, a material of a separation membrane of a membrane separating device was activated carbon.

The obtained membrane separating system was subjected to "a deteriorated state confirming test of the separation membrane" by the above method. The result is shown in Table 1.

### (Example 11)

A honeycomb structure in which a main component of partition walls was silica was prepared. Specifically, the honeycomb structure was prepared as follows. First, water and an organic binding agent were added to silica powder to prepare a forming raw material. A content of the silica powder in the forming raw material was 50 parts by mass in 100 parts by mass of the forming raw material. A content of the water in the forming raw material was 45 parts by mass in 100 parts by mass of the forming raw material. A content of the organic binding agent in the forming raw material was 5 parts by mass in 100 parts by mass of the forming raw material. As the organic binding agent, a water-soluble cellulose derivative (trade name: Cerander manufactured by YUKEN INDUSTRY CO., LTD.) was used. After kneading and plasticizing the obtained forming raw material, the material was formed into a honeycomb shape by use of a vacuum extruder, to obtain a formed honeycomb body. The obtained formed honeycomb body was dried at 85°C in an atmosphere of humidity of 90% for 48 hours. Afterward, the dried formed honeycomb body was fired at 1300°C for three hours, to obtain "the honeycomb structure in which the main component of the partition walls was silica".

By use of the obtained honeycomb structure, a membrane separating system was prepared by the method described in Example 1. Additionally, a material of a separation membrane of a membrane separating device was silica. The obtained membrane separating system was subjected to "a deteriorated state confirming test of the separation membrane" by the above method. The result is shown in Table 1.

### (Example 12)

A honeycomb structure "in which a zeolite membrane was disposed on the surfaces of partition walls" was prepared. Specifically, the honeycomb structure was prepared as follows. After placing 6.31 g of ethylenediamine (manufactured by Wako Pure Chemical Industries, Ltd.) into a fluororesin bottle, 0.993 g of 1-adamantanamin (manufactured by Aldrich Co.) was added, and dissolved so that precipitation of 1-adamantanamin was not left. 100 g of water was placed into another bottle, 84.12 g of 30 mass% silica sol (Snowtex S manufactured by NISSAN CHEMICAL INDUSTRIES, LTD.) was added and lightly stirred, and then a solution obtained by further mixing ethylenediamine and 1-adamantanamin was added, and stirred and mixed for about one hour, to obtain a raw material solution. Afterward, the raw material solution was transferred to a stainless steel pressure-resistant container with a fluororesin inner cylinder.

The surfaces of the partition walls (the inner wall surfaces of cells) of the honeycomb structure made of alumina were coated with the above solution in which seed crystals were dispersed by a filter coat method. The honeycomb structure was cylindrical, a diameter of a bottom surface was 30 mm, and a length in a central axis direction was 160 mm.

Next, the honeycomb structure in which the seed crystals were attached to the inner wall surfaces of the cells was disposed in a pressure-resistant content in which the raw material solution was contained. Afterward, a heating treatment (hydrothermal synthesis) was performed at 120°C for 64 hours. After the hydrothermal synthesis, washing and drying were performed, to obtain the honeycomb structure in which a DDR type zeolite membrane (containing 1-adamantanamin) was formed on the inner wall surfaces of the cells. Afterward, "the honeycomb structure in which the DDR type zeolite membrane (containing 1-adamantanamin) was formed on the inner wall surfaces of the cells" was heated at 500°C in the atmospheric air, to obtain the honeycomb structure "in which the zeolite membrane was disposed on the surfaces of the partition walls". By this heating, 1-adamantanamin was burnt and removed.

By use of the obtained honeycomb structure, a membrane separating system was prepared by the method described in Example 1. Additionally, a material of a separation membrane of a membrane separating device was zeolite. The obtained membrane separating system was subjected to "a deteriorated state confirming test of the separation membrane" by the above method. The result is shown in Table 1.

### (Examples 13 to 16)

Membrane separating systems were prepared similarly to Example 12, except that respective conditions were changed as shown in Table 1. The obtained membrane separating systems were subjected to "a deteriorated state confirming test of a separation membrane" by the above method. The results are shown in Table 1.

### (Example 17)

A honeycomb structure "in which an activated carbon membrane was disposed on the surfaces of partition walls" was prepared. Specifically, the honeycomb structure was prepared as follows. The honeycomb structure was immersed into an organic polymer solution which was a precursor of the activated carbon membrane to attach the organic polymer solution. As the honeycomb structure, the alumina honeycomb structure used in Example 12 was used. As the organic polymer, polyimide was used. Afterward, a heat treatment was performed to form a polyimide membrane which was the precursor. Afterward, the polyimide membrane was carbonized at 800°C in a reducing atmosphere to obtain the honeycomb structure "in which the activated carbon membrane was disposed on the surfaces of the partition walls".

By use of the obtained honeycomb structure, a membrane separating system was prepared by the method described in Example 1. Additionally, a material of a separation membrane of a membrane separating device was activated carbon. The obtained membrane separating system was subjected to "a deteriorated state confirming test of the separation membrane" by the above method. The result is shown in Table 1.

### (Example 18)

A honeycomb structure "in which a silica membrane was disposed on the surfaces of partition walls" was prepared. Specifically, the honeycomb structure was prepared as follows. The honeycomb structure was immersed into a silica sol solution which was a precursor to attach the silica sol solution, thereby forming a silica sol membrane on the surface of the honeycomb structure. The silica sol solution was obtained as follows. First, in the presence of nitric acid, tetraethoxysilane was heated at 50°C for five hours to carry out hydrolysis, thereby preparing a silica sol-containing liquid. Then, the silica sol-containing liquid was diluted with water, and a 10 mass% silica sol solution in terms of silica was obtained. As the honeycomb structure, the alumina honeycomb structure used in Example 12 was used. Afterward, a heat treatment was performed at 600°C to prepare the honeycomb structure "in which the silica membrane was disposed on the surfaces of the partition walls".

By use of the obtained honeycomb structure, a membrane separating system was prepared by the method described in Example 1. Additionally, a material of a separation membrane of a membrane separating device was silica. The obtained membrane separating system was subjected to "a deteriorated state confirming test of the separation membrane" by the above method. The result is shown in Table 1.

### (Example 19)

A honeycomb structure was prepared in which a main component of partition walls was zeolite and membrane-like zeolite was disposed on the surfaces of the partition walls. Specifically, the honeycomb structure was prepared as follows.

By the method described in Example 1, "the honeycomb structure in which the partition walls include zeolite as the main component" was prepared. Afterward, by the method described in Example 12, membrane-like zeolite was disposed on the surfaces of the partition walls, to obtain the honeycomb structure "in which the partition walls included zeolite as the main component and membrane-like zeolite was disposed on the surfaces of the partition walls".

By use of the obtained honeycomb structure, a membrane separating system was prepared by the method described in Example 1. Additionally, a material of a separation membrane of a membrane separating device was zeolite. The obtained membrane separating system was subjected to "a deteriorated state confirming test of the separation membrane" by the above method. The result is shown in Table 1.

### (Examples 20 to 23)

Membrane separating systems were prepared similarly to Example 19, except that respective conditions were changed as shown in Table 1. The obtained membrane separating systems were subjected to "a deteriorated state confirming test of a separation membrane" by the above method. The results are shown in Table 1.

### (Example 24)

A honeycomb structure was prepared in which a main component of partition walls was activated carbon and membrane-like activated carbon was disposed on the surfaces of the partition walls. Specifically, the honeycomb structure was prepared as follows.

By the method described in Example 10, "the honeycomb structure in which the partition walls include activated carbon as the main component" was prepared. Afterward, by the method described in Example 17, membrane-like activated carbon was disposed on the surfaces of the partition walls, to obtain the honeycomb structure "in which the partition walls included activated carbon as the main component and membrane-like activated carbon was disposed on the surfaces of the partition walls".

By use of the obtained honeycomb structure, a membrane separating system was prepared by the method described in Example 1. Additionally, a material of a separation membrane of a membrane separating device was activated carbon. The obtained membrane separating system was subjected to "a deteriorated state confirming test of the separation membrane" by the above method. The result is shown in Table 1.

### (Example 25)

A honeycomb structure was prepared in which a main component of partition walls was silica and membrane-like silica was disposed on the surfaces of the partition walls. Specifically, the honeycomb structure was prepared as follows.

By the method described in Example 11, "the honeycomb structure in which the partition walls include silica as the main component" was prepared. Afterward, by the method described in Example 18, membrane-like silica was disposed on the surfaces of the partition walls, to obtain the honeycomb structure "in which the partition walls included silica as the main component and membrane-like silica was disposed on the surfaces of the partition walls".

By use of the obtained honeycomb structure, a membrane separating system was prepared by the method described in Example 1. Additionally, a material of a separation membrane of a membrane separating device was silica. The obtained membrane separating system was subjected to "a deteriorated state confirming test of the separation membrane" by the above method. The result is shown in Table 1.

### (Comparative Example 1)

A membrane separating device (a separation membrane was zeolite) was prepared similarly to Example 1. A pretreatment device for membrane separation was not prepared. The only membrane separating device was obtained as a membrane separating system.

The obtained membrane separating system was subjected to "a deteriorated state confirming test of the separation membrane" by the above method. The result is shown in Table 1.

### (Comparative Example 2)

A membrane separating device (a separation membrane was activated carbon) was prepared similarly to Example 10. A pretreatment device for membrane separation was not prepared. The only membrane separating device was obtained as a membrane separating system.

The obtained membrane separating system was subjected to "a deteriorated state confirming test of the separation membrane" by the above method. The result is shown in Table 1.

### (Comparative Example 3)

A membrane separating device (a separation membrane was silica) was prepared similarly to Example 11. A pretreatment device for membrane separation was not prepared. The only membrane separating device was obtained as a membrane separating system.

The obtained membrane separating system was subjected to "a deteriorated state confirming test of the separation membrane" by the above method. The result is shown in Table 1.

The membrane separating systems of Examples 1 to 25 included the pretreatment devices for membrane separation, and hence the separation membranes were not easily deteriorated. The membrane separating systems of Comparative Examples 1 to 3 did not include the pretreatment device for membrane separation, and hence the separation membranes were easily deteriorated.

### Description of Reference Numerals

1: partition wall, 2: cell, 3: outer peripheral wall, 4: membrane-like adsorbent, 11: one end surface, 12: other end surface, 21: inflow port, 22: outflow port, 23: suction port, 24: O-ring, 31: container for a non-penetrating substance, 32: container for a penetrating substance, 50: honeycomb structure, 60: storage container, 100 and 200: pretreatment device for membrane separation, 300: membrane separating device, and 400: membrane separating system.

## Claims

1. A membrane separating system comprising:
a pretreatment device for membrane separation comprising:
a honeycomb structure having porous partition walls with which a plurality of cells extending from one end surface to the other end surface are formed to become through channels of a fluid; and
a storage container in which the honeycomb structure is stored and which has an inflow port and an outflow port of the fluid,
wherein the partition walls include an adsorbent as a main component, a membrane-like adsorbent is disposed on the surfaces of the partition walls, or the partition walls include the adsorbent as the main component and the membrane-like adsorbent is disposed on the surfaces of the partition walls; and
a membrane separating device which is disposed on a downstream side of the pretreatment device for membrane separation and which includes a separation membrane,
wherein the adsorbent of the pretreatment device for membrane separation is the same material as the separation membrane of the membrane separating device.

2. The membrane separating system according to claim 1,
wherein a total of surface areas in the cells of the honeycomb structure is from 5 to 1000 cm²/cm³.

3. The membrane separating system according to claim 1 or 2,
wherein the adsorbent is at least one selected from group consisting of zeolite, activated carbon and silica.

4. The membrane separating system according to any one of claims 1 to 3,
wherein the separation membrane is a zeolite membrane, activated carbon membrane or a silica membrane.

5. A membrane separating method comprising:
allowing a fluid to be treated which is to be separated by the separation membrane to flow into the pretreatment device for membrane separation of the membrane separating system according to any one of claims 1 to 4 through the inflow port, to flow through the honeycomb structure and to flow out of the pretreatment device through the outflow port; and
then supplying the fluid to be treated to the membrane separating device, to separate the fluid to be treated by the membrane separating device.

6. The membrane separating method according to claim 5,
wherein a membrane-like adsorbent is disposed on the surfaces of the partition walls of the honeycomb structure disposed in the pretreatment device for membrane separation, and a pressure of a space on the side of a surface of the membrane-like adsorbent of the pretreatment device for membrane separation which is opposite to a surface of the adsorbent to which the fluid to be treated is supplied is reduced, to separate the fluid to be treated.

7. The membrane separating method according to claim 5 or 6,
wherein a speed of the fluid to be treated which flows through the cells of the honeycomb structure when allowing the fluid to be treated to pass through the pretreatment device for membrane separation is from 0.1 to 5 m/second.

## Patentansprüche

1. Membrantrennsystem mit:
einer Vorbehandlungsvorrichtung zur Membrantrennung, die Folgendes umfasst:
eine Wabenstruktur mit porösen Trennwänden, mit denen eine Vielzahl von sich von einer Endfläche zur anderen Endfläche erstreckenden Zellen ausgebildet wird, sodass sie zu Durchgangskanälen eines Fluids werden; und
einen Lagerbehälter, in dem die Wabenstruktur gelagert ist und der eine Einströmöffnung und eine Ausströmöffnung des Fluids hat,
wobei die Trennwände als einen Hauptbestandteil ein Adsorptionsmittel aufweisen, auf den Oberflächen der Trennwände ein membranartiges Adsorptionsmittel angeordnet ist oder die Trennwände als den Hauptbestandteil das Adsorptionsmittel aufweisen und auf den Oberflächen der Trennwände das membranartige Adsorptionsmittel angeordnet ist; und
einer Membrantrennvorrichtung, die auf einer stromabwärtigen Seite der Vorbehandlungsvorrichtung zur Membrantrennung angeordnet ist und die eine Trennmembran aufweist,
wobei das Adsorptionsmittel für die Vorbehandlungsvorrichtung zur Membrantrennung das gleiche Material wie die Trennmembran der Membrantrennvorrichtung ist.

2. Membrantrennsystem nach Anspruch 1,
wobei eine Gesamtoberfläche der Zellen der Wabenstruktur 5 bis 1000 cm²/cm³ beträgt.

3. Membrantrennsystem nach Anspruch 1 oder 2,
wobei das Adsorptionsmittel mindestens eines ist, das aus der aus Zeolith, Aktivkohle und Siliciumdioxid bestehenden Gruppe ausgewählt ist.

4. Membrantrennsystem nach einem der Ansprüche 1 bis 3,
wobei die Trennmembran eine Zeolithmembran, eine Aktivkohlemembran oder eine Siliziumdioxidmembran ist.

5. Membrantrennverfahren, das Folgendes umfasst:
Einströmen lassen eines zu behandelnden Fluids, das durch die Trennmembran getrennt werden soll, in die Vorbehandlungsvorrichtung zur Membrantrennung des Membrantrennsystems gemäß einem der Ansprüche 1 bis 4 durch die Einströmöffnung hindurch, damit es durch die Wabenstruktur strömt und durch die Ausströmöffnung aus der Vorbehandlungsvorrichtung herausströmt; und
dann Zuführen des zu behandelnden Fluids zur Membrantrennvorrichtung, um das zu behandelnde Fluid mit der Membrantrennvorrichtung zu behandeln.

6. Membrantrennverfahren nach Anspruch 5,
wobei auf den Oberflächen der Trennwände der Wabenstruktur, die in der Vorbehandlungsvorrichtung zur Membrantrennung angeordnet ist, ein membranartiges Adsorptionsmittel angeordnet ist und ein Druck eines Raums auf der Seite einer Oberfläche des membranartigen Adsorptionsmittels der Vorbehandlungsvorrichtung zur Membrantrennung, die einer Oberfläche des Adsorptionsmittels gegenüberliegt, der das zu behandelnde Fluid zugeführt wird, reduziert wird, um das zu behandelnde Fluid zu trennen.

7. Membrantrennverfahren nach Anspruch 5 oder 6,
wobei eine Geschwindigkeit des zu behandelnden Fluids, das durch die Zellen der Wabenstruktur strömt, wenn das zu behandelnde Fluid durch die Vorbehandlungsvorrichtung zur Membrantrennung gehen gelassen wird, 0,1 bis 5 m/Sekunde beträgt.

## Revendications

1. Système de séparation par membrane comprenant :
un dispositif de prétraitement pour la séparation par membrane, comprenant :
une structure en nid d'abeilles ayant des parois de séparation poreuses avec lesquelles une pluralité de cellules s'étendant d'une surface d'extrémité à l'autre surface d'extrémité, sont formées pour devenir des canaux débouchants d'un fluide ; et
un récipient de stockage dans lequel la structure en nid d'abeilles est stockée et qui a un orifice d'entrée et un orifice de sortie de fluide,
dans lequel les parois de séparation comprennent un adsorbant en tant que composant principal, un absorbant en forme de membrane est disposé sur les surfaces des parois de séparation, ou les parois de séparation comprennent l'adsorbant en tant que composant principal et l'adsorbant en forme de membrane est disposé sur les surfaces des parois de séparation ; et
un dispositif de séparation de membrane qui est disposé sur un côté en aval du dispositif de prétraitement pour la séparation par membrane, et qui comprend une membrane de séparation,
dans lequel l'adsorbant du dispositif de prétraitement pour séparation par membrane est le même matériau que la membrane de séparation du dispositif de séparation par membrane.

2. Système de séparation par membrane selon la revendication 1,
dans lequel un total des surfaces dans les cellules de la structure en nid d'abeilles est de 5 à 1000 cm²/cm³.

3. Système de séparation par membrane selon la revendication 1 ou 2,
dans lequel l'adsorbant est au moins un élément sélectionné dans le groupe comprenant la zéolite, le charbon actif et la silice.

4. Système de séparation par membrane selon l'une quelconque des revendications 1 à 3,
dans lequel la membrane de séparation est une membrane en zéolite, une membrane en charbon actif ou une membrane en silice.

5. Procédé de séparation par membrane comprenant les étapes consistant à :
permettre à un fluide à traiter qui doit être séparé par la membrane de séparation de s'écouler dans le dispositif de prétraitement pour séparation par membrane du système de séparation par membrane selon l'une quelconque des revendications 1 à 4 par l'orifice d'entrée, de s'écouler à travers la structure en nid d'abeilles et de sortir du dispositif de prétraitement par l'orifice de sortie ; et
amener ensuite le fluide à traiter jusqu'au dispositif de séparation par membrane, pour séparer le fluide à traiter par le dispositif de séparation par membrane.

6. Procédé de séparation par membrane selon la revendication 5,
dans lequel un adsorbant de type membrane est disposé sur les surfaces des parois de séparation de la structure en nid d'abeilles disposée dans le dispositif de prétraitement pour la séparation par membrane, et une pression d'un espace sur le côté d'une surface de l'adsorbant de type membrane du dispositif de prétraitement pour la séparation par membrane qui est opposée à une surface de l'adsorbant à laquelle le fluide à traiter est amené, est réduite, pour séparer le fluide à traiter.

7. Procédé de séparation par membrane selon la revendication 5 ou 6,
dans lequel une vitesse du fluide à traiter qui s'écoule par les cellules de la structure en nid d'abeilles lorsque l'on autorise le fluide à traiter à passer à travers le dispositif de prétraitement pour la séparation par membrane est de 0,1 à 5m/seconde.
